# EUROPÄISCHE PATENTANMELDUNG

(11) **EP 2 690 693 A1**
(43) Veröffentlichungstag der Anmeldung: **29.01.2014**
(21) Anmeldenummer: 12188717.8
(22) Anmeldetag: 16.10.2012
(51) Int. Cl.: H01M 4/92, C25B 11/04

(54) **Hochoberflächiger trägerloser Katalysator für elektrochemische Prozesse und Verfahren zu seiner Herstellung**

(30) Priorität: 25.07.2012 EP 12177908
(71) Anmelder: Paul Scherrer Institut, 5232 Villigen (CH); TU Dresden, 01062 Dresden (DE)
(72) Erfinder: SCHMIDT, Thomas Justus, 5303 Würenlingen (CH); RODRIGUEZ, Perez Paramaconi Benito, 5417 Untersiggenthal (CH); RABIS, Annett, 8902 Urdorf (CH); FOELSKE-SCHMITZ, Annette, 5322 Koblenz (CH); KÖTZ, Ruediger, 5316 Gippingen (CH); EYCHMÜLLER, Alexander, 01187 Dresden (DE); LIU, Wei, 8044 Zürich (CH); YUAN, Jipei, 047300 Huguan, Changzhi Shanxi Province (CN); GAPONIK, Nikolai, 01217 Dresden (DE); HERRMANN, Anne-Kristin, 01159 Dresden (DE)
(74) Vertreter: Fischer, Michael

(57) **Zusammenfassung**

Ziel dieser Erfindung ist es, einen Katalysator bereitzustellen, welcher die Korrosion eines Trägers vermeidet und trotzdem eine aktive Oberfläche von mehr als 30 m²/g_{Metall}, bevorzugt mehr als 50 m²/g_{Metall}, besonders bevorzugt mehr als 70 m²/g_{Metall}, das heisst eine hohe Dispersion aufweist, um somit sowohl hohe Stabilität als auch hohe Aktivität (Selektivität) zu erzielen.

Dieses Ziel wird gemäss der vorliegenden Erfindung durch einen hochoberflächigen trägerlosen Katalysator aus mindestens einem Metall für elektrochemische Prozesse erreicht, bei dem eine BET Oberfläche von mindestens 30 m²/g, vorzugsweise grösser 50 m²/g, vorgesehen ist, wobei diese BET-Oberfläche durch eine als Metall-Aerogel ausgeführte Anordnung des mindestens einen Metalls erzielt ist.

Auf diese Weise werden hier erfindungsgemäss sogenannte Metall-Aerogele hergestellt. Metall-Aerogele sind filigrane anorganische Überstrukturen mit hoher Porosität. Derartige Aerogele werden auch metallische Polymere genannt, da typischerweise Einzelpartikel im Nanometer-Bereich miteinander vernetzt sind und die genannten hoch-porösen Netzstrukturen bilden.

## Beschreibung

Die Erfindung betrifft neuartige hochoberflächige trägerlose Katalysatoren aus Metallen für elektrochemische Prozesse und Verfahren zu deren Herstellung.

Als Katalysatoren für elektrochemische Reaktionen werden oftmals Metalle der Platingruppe oder andere Edelmetalle verwendet. Weiterhin finden oftmals Legierungen von Platingruppenmetallen mit anderen Platingruppenmetallen oder anderen Übergangsmetallen Anwendung. Dies können z.B. Nickel, Kobalt, Vanadium, Eisen, Titan, Kupfer, Ruthenium, Palladium, Iridium, Gold usw. sein. Verwendung finden derartige Katalysatoren insbesondere in Brennstoffzellen, Elektrolyseuren oder Metall-Luft Batterien. Die Katalysatoren können sowohl auf der Anode als auch auf der Kathode zur Anwendung kommen. In all diesen Anwendungen müssen die Katalysatoren sehr korrosionsstabil sein, speziell in Brennstoffzellen-Kathoden, Elektrolyseur-Anoden und der Luft-Seite von Metall-Luft Batterien.

Damit eine möglichst hohe aktive Katalysatoroberfläche von über 70 m²/g erzielt werden kann, werden die Katalysatoren typischerweise geträgert. Hier wird z.B. für Brennstoffzellen im allgemeinen Kohlenstoff als Träger eingesetzt. Die eingesetzten Kohlenstoffe weisen typischerweise spezifische BET Oberflächen von bis zu 1000 m²/g auf, damit die Katalysatorpartikel möglichst fein verteilt werden können, um somit die aktive Katalysatoroberfläche zu erhöhen. Nachteil von üblichen Trägern wie z.B. Vulcan XC 72 (Firma Cabot) mit BET Oberflächen von ca. 250 m²/g oder Ketjen Black EC-300 (Firma Akzo-Nobel) von ca. 800 m²/g ist, dass sie sehr schnell korrodieren, d.h. unter Betriebsbedingungen sehr schnell zu CO₂ oxidiert werden und damit die Funktionsfähigkeit der Elektrode beeinträchtigen, was dann ein Versagen des elektrochemischen Systems, wie der Brennstoffzelle, zur Folge hat.

Allgemein kann man einen guten funktionsfähigen Elektrokatalysator mit einer hohen aktiven Oberfläche und einem Träger definieren, der nicht oder nur wenig korrodiert werden kann.

Ein Lösungsweg um Katalysatorträger zu stabilisieren ist, die hochoberflächigen Kohleträger zu graphitisieren, was ihre Korrosionsstabilität typischerweise erhöht, die intrinsische Instabilität jedoch nicht verhindert. Alternativ können ungeträgerte Katalysatoren eingesetzt werden, was natürlicherweise Katalysatorträgerprobleme verhindert. Jedoch sind ungeträgerte Systeme immer verbunden mit einer Verringerung der Katalysatordispersion, d.h. die aktive Katalysatorfläche wird von über 70 m²/g bei geträgerten Systemen reduziert zu ungefähr maximal 20 m²/g, z.B. bei Pt-Schwarz Katalysatoren. Das bedeutet, dass man z.B. bei einer Brennstoffzelle die Katalysatorbeladung entsprechend dem Faktor der Oberflächenverringerung vergrössert werden muss, um die gleiche elektrochemische Leistung zu erzielen. Dies verursacht konsequenterweise höhere Kosten, speziell wenn die Katalysatoren aus der Pt-Metall-Gruppe stammen. Ein kommerziell erhältliches System wird zum Beispiel von der Firma 3M produziert. Hierbei werden auf spezielle organische, nichtleitende Substrate Katalysatoren wie Pt oder Metalllegierungen durch Verdampfen oder Sputtern aufgebracht, was zwar einem ungeträgerten Katalysatorsystem entspricht, jedoch auch nur spezifische Oberflächen von maximal 20 m²/g_{Metall} erzielt. Diese sogenannten ausgedehnten Metalloberflächen zeichnen sich durch sehr hohe Stabilität aus, sind jedoch wie oben bereits erwähnt durch eine geringe Dispersion (Verhältnis der Oberflächen-Atome zu den Bulk-Atomen) gekennzeichnet, was die Ausnutzung des verwendeten Katalysators signifikant reduziert, da sämtliche elektrochemischen Reaktionen auf der Oberfläche des Katalysators stattfinden.

Ziel dieser Erfindung ist es nun, ein Katalysatorsystem bereitzustellen, welches die Korrosion des Trägers vermeidet und trotzdem eine aktive Oberfläche von mehr als 70 m²/g_{Metall}, das heisst eine hohe Dispersion aufweist, um somit sowohl hohe Stabilität als auch hohe Aktivität (Selektivität) zu erzielen.

Dieses Ziel wird gemäss der vorliegenden Erfindung durch einen hochoberflächigen trägerlosen Katalysator aus mindestens einem Metall für elektrochemische Prozesse erreicht, bei dem eine BET Oberfläche von mindestens 30 m²/g, vorzugsweise grösser 50 m²/g, vorgesehen ist, wobei diese BET-Oberfläche durch eine als Metall-Aerogel ausgeführte Anordnung des mindestens einen Metalls erzielt ist.

Weiter liegt der vorliegenden Erfindung die Aufgabe zugrunde, ein Verfahren zur Herstellung eines derartigen Katalysators anzugeben.

Diese Aufgabe wird erfindungsgemäss durch ein Verfahren zur Herstellung eines Katalysators, insbesondere eines Katalysator gemäss der vorgenannten Art, gelöst, welches die folgenden Verfahrensschritte umfasst:
a) Bereitstellen einer wässrigen oder organischen Metallsalzlösung;
b) Hinzugabe eines wässrigen oder organischen Reduktionsmittels, insbesondere einer wässrigen Natriumborhydratlösung;
c) Ruhenlassen des wässrigen oder organischen Gemisches zur Bildung eines Metallhydrogels;
d) Waschen des Metallhydrogels mit Wasser und Zugabe von Aceton;
e) Abtrennen des Wassers zur Erlangung eines aceton-haltigen Metallhydrogels;
f) Einbringen des aceton-haltigen Metallhydrogels in einen Trockner und Austausch des Acetons mit flüssigem Kohlendioxid; und
g) Überführen des Kohlendioxids in die Gasphase durch Erhöhung der Temperatur des kohlendioxid-haltigen Metallhydrogels über den kritischen Punkt von Kohlendioxid und Entspannen und Ablassen des in die Gasphase übergetretenen Kohlendioxids. Alternativ zum Schritt g) kann die Trocknung des flüssigen Kohlendioxids auch durch Gefriertrocknung, Vakuum-Trocknung oder andere gängige Trocknungsverfahren erfolgen.

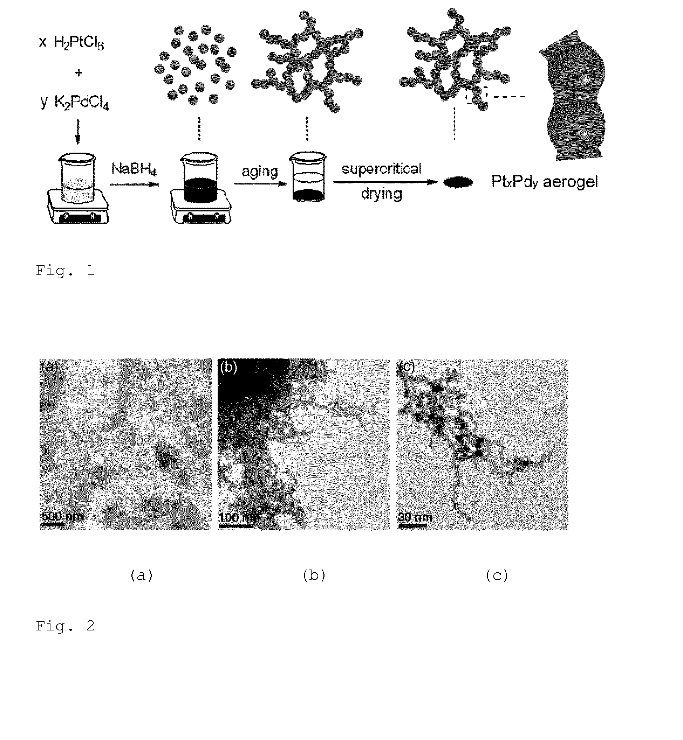

Auf diese Weise werden hier erfindungsgemäss sogenannte Metall-Aerogele hergestellt. Schematisch ist dieses Herstellungsverfahren in Figur 1 gezeigt. Die Figur 2 zeigt anhand von einem SEM-Bild (a) und von zwei TEM-Bildern (b) und (c), dass die erfindungsgemässen Metall-Aerogele filigrane anorganische Überstrukturen mit hoher Porosität im Mikro- und Nanobereich bilden. Derartige Aerogele werden auch metallische Polymere genannt, da typischerweise Einzelpartikel im Nanometer-Bereich miteinander vernetzt sind und die genannten hoch-porösen Netzstrukturen bilden. Ein Kennzeichen von Aerogelen ist die hohe Porosität des Netzwerkes an Nanostrukturen verbunden mit der dadurch gegenüber den Bulkmaterialien signifikant reduzierten Dichte (bis zu 1000 mal geringere Dichte gegenüber dem Bulkmaterial).

Anorganische Aerogele, speziell von Siliziumdioxid, Aluminiumoxid, oder Aerogele von Kohlenstoff sind an sich bekannt und werden in vielen Bereichen der Gasphasenkatalyse als Trägermaterial für die aktive Phase eingesetzt. Kürzlich wurde auch die Herstellung von ungeträgerten Metall-Aerogelen beschrieben (Angew. Chemie 2009, 121, 9911) mit Silber als vernetzendem Material. Die hier beschriebenen Bi-metallischen Aerogelmischungen (Ag/Pt, Ag/Au) enthalten jedoch immer Silber, welches im beschriebenen Prozess als vernetzendes Material gilt. Weiterhin erfolgt die Herstellung der Aerogele (Angew. Chemie 2009, 121, 9911) mithilfe eines Stabilisators, z.B. Dextrinen, die nach der Synthese aufwändig entfernt werden müssen bzw. zurückbleiben und vergiftend auf den Katalysator wirken können.

Ein Kennzeichen der Aerogele ist die spezifische Oberfläche, auch BET Oberfläche genannt. Die Bestimmung der BET Oberfläche erfolgt üblicherweise über die Adsorption und Desorption von N₂. Die in Angew. Chemie 2009, 121, 9911 beschriebenen Bi-metallischen Aerogele weisen BET Oberflächen von weniger als 50 m²/g auf. Die erfindungsgemässen mono-metallischen Aerogele weisen Oberflächen von mindestens 30 m²/g auf, vorzugsweise Oberflächen von 50 m²/g und besonders bevorzugt von 70 m²/g und mehr auf.

Während in Angew. Chemie 2009, 121, 9911 nur unlegierte bimetallische Aerogele beschrieben werden, sind die erfindungsgemässen bi- oder tri-metallischen Aerogele definierte Legierungen. Die erfindungsgemässen bi- oder tri-metallischen Aerogele weisen Oberflächen von mindestens 30m²/g auf, vorzugsweise Oberflächen von 50 m²/g und besonders bevorzugt von mindestens 70 m²/g und mehr auf.

Die Bildung von Legierungen lässt sich üblicherweise durch Röntgen-Diffraktion bestimmen, indem man auch in mehr-metallischen Systemen nur einen Beugungsreflex pro Orientierung erkennt, was auf die Ausbildung von nur einer Phase deutet, während nicht legierte Systeme pro Orientierung mehrere Reflexe aufweisen, was auf eine Mehrphasenbildung deutet.

Überraschenderweise weisen sowohl die mono-metallischen als auch die legierten mehr-metallischen Aerogele eine im Vergleich zu geträgerten Systemen, z.B. Pt auf Kohlenstoff, erhöhte katalytische Aktivität auf, speziell für Reaktionen, die in Brennstoffzellen, Elektrolyseuren und Metall-Luft Batterien stattfinden.

Die elektrochemische Aktivität lässt sich mithilfe von Messungen mit einer rotierenden Scheibenelektrode in 0.1 M HClO₄ oder 0.1 M KOH bestimmen. Der zu untersuchende Katalysator wird auf einer Glaskohlenstoffscheibe mit 5 mm Durchmesser aufgebracht. Die Beladung beträgt je nach Katalysator typischerweise zwischen 10 und 40 µg/cm² Katalyator. Die gewünschte Reaktion wird entsprechend in mit Reaktand gesättigtem Elektrolyten durchgeführt. Für die Reduktion von Sauerstoff wird die Aktivität als Quotient des Produkts und der Differenz des Diffusionsgrenzstromes und des gemessenen Stromes bei 0.9 V gebildet, das Ergebnis ist die elektrochemische Aktivität des Katalysators für die Reduktion von Sauerstoff. Äquivalent lassen sich die Aktivitäten für andere Reaktionen bestimmen, wie z.B. die Aktivität für die O₂-Entwicklung, die H₂-Entwicklung usw.

Überraschenderweise weisen sowohl die mono-metallischen als auch die legierten mehr-metallischen Aerogele eine im Vergleich zu geträgerten Systemen, z.B. Pt auf Kohlenstoff, erhöhte Korrosionsstabilität auf.

Die Korrosionsstabilität wird ebenfalls mithilfe einer rotierenden Scheibenelektrode bestimmt. Der zu untersuchende Katalysator wird auf einer Glaskohlenstoffscheibe mit 5mm Durchmesser aufgebracht. Die Beladung beträgt je nach Katalysator typischerweise zwischen 10 und 40 µg/cm² Katalysator. Dabei wird wie oben beschreiben z.B. die Sauerstoffreduktions- oder Entwicklungsaktivität bestimmt, bevor die Elektrode 8000 mal zwischen elektrochemischen Potentialen zwischen 0.5 V und 1.0 V zykliert wird. Dann wird die Aktivität wieder analog bestimmt. Eine erhöhte Stabilität kann man nun direkt an einer erhöhten Aktivität ablesen. Weiterhin wird die Korrosionsstabilität potentiostatisch durch halten vorgenannter Elektroden bei 1.5 V über einen Zeitraum von mehreren Stunden und der Bestimmung der Aktivität vor und nach dem Test bestimmt.

Das katalytisch aktive Material der ungeträgerten erfindungsgemässen Aerogele ist Pt, Pd, Au, Ir, Ru, Rh, Os, Cu, Ni, Co, Fe, Mn. Ganz bevorzugte Metalle sind Pt, Pd, Au, Ir, Ru, Ag, Rh, Os, Cu, Ni, besonders bevorzugt Pt, Pd, Au, Ir, Ru, Cu. Weiterhin ist das erfindungsgemässe aktive Material eine Legierung der obengenannten mit einem oder mehreren Metallen der Nebengruppen und Hauptgruppen. Speziell für die Anwendung als Kathodenkatalysator in Brennstoffzellen sind Legierungen von Pt mit Ni, Co, Fe, Mn, Pd zu nennen, wobei die genannte Liste nicht abschliessend ist.

Die erfindungsmässigen Katalysatoren werden zum Beispiel als Elektrodenkatalysator, bevorzugt als Kathodenkatalysator, eingesetzt. Insbesondere eignet sich der Katalysator zur Verwendung als Elektrodenkatalysator in Brennstoffzellen, hier insbesondere auf der Kathodenseite. Weiterhin werden die erfindungsgemässen Katalysatoren als Anodenkatalysatoren in Elektrolyseuren eingesetzt, insbesondere als Anodenkatalysatoren zur Wasserelektrolyse. Weiterhin werden die erfindungsgemässen Katalysatoren als Kathodenkatalysatoren in Elektrolyseuren eingesetzt, insbesondere zur Bildung von Wasserstoff und zur Reduktion von kohlenstoffhaltigen Verbindungen. Weiterhin werden die erfindungsgemässen Katalysatoren in Luft-Elektroden eingesetzt, insbesondere in Luft-Elektroden von Li-Luft Batterien und Zn-Luft Batterien, jedoch auch in anderen Metall-Luft Batterien.

### Beispiel 1:

### Synthese von PtPd-Legierungsaerogelen

### a) Pt:Pd Verhältnis 1:1

396 mL einer wässrigen Lösung von 0.1 mM K₂PdCl₄/0.1 mM H₂PtCl₆ wird für 10 min gerührt bevor 4.5 mL einer wässrigen frisch bereiteten 40 mM NaBH₄ Lösung zugegeben wird. Dabei ändert die Lösung ihre Farbe von hellem gelb nach dunklem grau. Danach wird die Lösung noch weitere 30 min gerührt und für weitere drei Tage stehen gelassen. Nach drei Tagen formiert sich ein schwarzes PtPd Hydrogel der Zusammensetzung 1:1. Das Hydrogel wird 6-8 mal mit Wasser gewaschen, danach wird tropfenweise Aceton zugegeben um das Wasser zu verdrängen. Das acetonhaltige Hydrogel wird in einen Exsikkator für einen Tag unter Vakuum gesetzt, damit enthaltenes Wasser entfernt wird. Dieser Vorgang wird zweimal wiederholt. Das erhaltene wasserfreie acetonhaltige Gel wird in einen Kritischen-Punkt-Trockner überführt, und das Aceton durch flüssiges CO₂ ausgetauscht (5 Minuten). Das Behältnis bleibt über Nacht verschlossen und die Spülung mit flüssigem CO₂ wird wiederholt, bevor die Temperatur der Probe über den kritischen Punkt von CO₂ steigt, damit das CO₂ in die Gasphase übertreten kann. Das Gas wird dann langsam entspannt und abgelassen, und das PtPd- Aerogel der Zusammensetzung 1:1 wird erhalten.

### b) Pt:Pd Verhältnis 4:1

396 mL einer wässrigen Lösung von 0.04 mM K₂PdCl₄/0.16 mM H₂PtCl₆ wird für 10 min gerührt bevor 4.5 mL einer wässrigen frisch bereiteten 49 mM NaBH₄ Lösung zugegeben wird. Nach den in a) beschriebenen Schritten wird ein PtPd-Aerogel der Zusammensetzung 4:1 erhalten.

### c) Pt:Pd Verhältnis 1:4

396 mL einer wässrigen Lösung von 0.16 mM K₂PdCl₄/0.04 mM H₂PtCl₆ wird für 10 min gerührt, bevor 4.5 mL einer wässrigen frisch bereiteten 32 mM NaBH₄ Lösung zugegeben wird. Nach den in a) beschriebenen Schritten wird ein PtPd-Aerogel der Zusammensetzung 1:4 erhalten.

### Beispiel 2:

### Synthese von Pd-Aerogel

396 mL einer wässrigen Lösung von 0.2 mM K₂PdCl₄ wird für 10 min gerührt und 4.5 mL einer wässrigen frisch bereiteten 27 mM NaBH₄ Lösung zugegeben wird. Der weitere Prozess folgt Bsp. 1a) ausser dass die Formierungszeit auf 17 Tage erhöht wird. Es wird ein reines Pd-Aerogel erhalten.

### Beispiel 3:

### Synthese von Pt-Aerogel

396 mL einer wässrigen Lösung von 0.2 mM H₂PtCl₆ werden für 10 min gerührt und 4.5 mL einer wässrigen 27 mM frisch bereiteten NaBH₄ Lösung zugegeben wird. Der weitere Prozess folgt Bsp. 1a). Es wird ein reines Pt-Aerogel erhalten.

### Beispiel 4:

### a) Bestimmung von BET Oberflächen

Die spezifische Oberfläche der verschiedenen Metall-Aerogele werden durch Messung der N₂-Adsorption (sog. BET Oberfläche) bei 77 K bestimmt (Quantachrome Autosorb 1). 40 mg des Aerogels werden in die Messzelle transferiert und über Nacht bei 323 K unter Vakuum entgast. Die spezifische Oberfläche wird durch Berechnung einer Mehrpunkt-BET Gleichung (0.05 < p/po < 0.2) bestimmt. Die Ergebnisse sind in Tabelle Beispiel 4a zu finden. Es ist zu erkennen, dass die erfindungsgemässen Katalysatoren eine BET-Oberfläche von über 70m²/g aufweisen.

**Tabelle Beispiel 4a**

| Aerogel Zusammensetzung | BET Metall-Oberfläche [m² / gₘₑₜₐₗₗ] |
|---|---|
| PtPd (1:1) | 86 |
| PtPd (4:1) | 126 |
| PtPd (1:4) | 75 |
| Pd | 125 |
| Pt | 133 |

### b) Röntgendiffraktionsmessung zur Bestimmung der Legierung

Um die Legierung der PtPd Aerogele zu bestimmen, werden Röntgen-Diffraktionsmessungen gemacht. Um festzustellen, ob Legierungen vorliegen, liegen die Reflexe der Legierungen als Funktion der Zusammensetzung zwischen den Reflexen der reinen Metalle. In Tabelle Beispiel 4b sind die Lage der (111) Reflexe als Funktion der Legierungszusammensetzung gezeigt. Die Verschiebung der Reflexe als Funktion der Aerogel-Zusammensetzung deutet auf eine Legierungsbildung hin.

**Tabelle Beispiel 4b**

| Aerogel Zusammensetzung | Lage (111) Reflex in 2Θ [°] |
|---|---|
| Pt | 39.072 |
| PtPd 4:1 | 39.525 |
| PtPd 1:1 | 39.719 |
| Pd | 39. 935 |

### c) Zusammensetzung der Legierungen

Die Zusammensetzung der Aerogele wird durch Energiedispersive Röntgen Spektroskopie (EDS) durchgeführt. Dabei wird eine Probe der Aerogele in ein Zeiss DSM 982 Gemini Instrument überführt. The EDS Daten werden bei einer Vergrösserung von 5000, 9 kV Beschleunigungsspannung, einem Winkel von 35° mit drei Iterationen gemessen. Die Resultate sind in Tabelle Beispiel 4c zu finden.

**Tabelle Beispiel 4c**

| **Aerogele** | **Pt (%)** | **Pd (%)** |
|---|---|---|
| Pd | 0 | 100 |
| PtPd 1:4 | 17.3 | 82.7 |
| PtPd 1:1 | 47.8 | 52.2 |
| PtPd 4:1 | 77.5 | 22.5 |
| Pt | 100 | 0 |

### Beipiel 5:

### Bestimmung der elektrochemisch aktiven Oberfläche Pt-Aerogels, Pd-Aerogels und des kommerziellen 20% Pt/Vulcan XC72 (ETEK-BASF Fuel Cell GmbH)

Die elektrochemisch aktive Metalloberfläche des Pt-Aerogels wird durch Zyklische Voltammetrie bestimmt. Dabei wird eine dünne Schicht des Aeorgels aus einer Suspension auf einer Glasskohlenstoffelektrode der Fläche 0.196 cm² aufgetragen um eine Beladung von 2.25 µgPt zu erhalten. Dann wird die sogenannte Wasserstoffunterpotentialabscheidung in 0.1 M HClO₄ Lösung dazu verwendet, die spezifische elektrochemische Oberfläche zu bestimmen. Aus einem zyklischen Voltammogram wird der Bereich zwischen 0.05 V und 0.45 V integriert und nach Abzug der Kapazität der Doppelschicht die Oberfläche berechnet. Dabei wird die übliche Ladung von 0.210 mC pro cm² tatsächlicher elektrochemischer Oberfläche als Basiswert verwendet. Zu Vergleichszwecken wird die Oberfläche eines geträgerten industriellen Brennstoffzellen-Katalysators der Firma ETEK-BASF Fuel Cell GmbH auf gleiche Weise vermessen, welcher oftmals in Brennstoffzellen eingesetzt wird. Die Pt-Beladung des geträgerten Systems beträgt 44 µgpt/cm². Die im Vergleich zum geträgerten System deutlich höhere spezifische elektrochemische Oberfläche der erfindungsgemässen Aerogele ist zu erkennen.

Pt-Aerogel:
20% Pt/Vulcan XC72: 49 m²/g_{Pt}
Pt-Aerogel, hergestellt nach Beispiel 2: 92 m²/g_{Pt}
Pd-Aerogel, hergestellt nach Beispiel 3: 95 m²/g_{Pt}

### Beispiel 6:

### Bestimmung der Sauerstoffreduktionsaktivität von Pt-Aerogel, PtPd-Aerogel und 20% Pt/Vulcan

Die Sauerstoffreduktionsaktivität (ORR-Aktivität) wird mithilfe von Messungen mit einer rotierenden Scheibenelektrode bestimmt. Dabei werden die Elektroden präpariert wie in Beispiel 5 beschrieben und in O₂-gesättigtem 0.1 M HClO₄ Elektrolyten bei einer Rotationsrate von 1600 rpm (revolutions per minute) und einer PotentialVorschubgeschwindigkeit von 10 mV/s gemessen bei 25°C. Die erhaltenen kathodischen Kurven werden IR-korrigiert (korrigiert für den Ohmschen Widerstand des Elektrolyten) und die Sauerstoffreduktions-Stromdichte bei 0.9 V bestimmt. Es werden sowohl die oberflächenspezifischen und massenspezifischen Stromdichten berechnet und mit der Aktivität eines geträgerten industriellen Brennstoffzellen-Katalysators der Firma ETEK-BASF Fuel Cell, der häufig in Brennstoffzellen verwendet wird, verglichen. Die Resultate befinden sich in Tabelle Beispiel 6/7. Bei ähnlicher spezifischer Aktivität des Pt/Vulcan XC 72 Katalysators und des erfindungsgemässen Pt-Aerogel Katalysators, ist jedoch die Massenspezifische Aktivität des erfindungsgemässen Aerogelkatalysators deutlich erhöht.

### Beispiel 7:

### Bestimmung der Korrosionsstabilität der Aerogele und Pt/Vulcan

Die Korrosionsstabilität der erfindungsgemässen Katalysatoren wird durch extensives Potentialzyklen bestimmt.

Zyklus 1: Lebenszeit-Zyklus einer Brennnstoffzelle. Dabei wird die Elektrode zwischen einem Potential von 0.5 V und 1.0 V in 0.1 M HClO₄ bei Raumtemperatur und 50 mV/s

Potentialvorschubgeschwindigkeit gezykelt und nach 8000 Zyklen die Sauerstoffaktivität wie oben beschrieben bestimmt. Mit diesem Zyklus wird die Stabilität der Nanopartikel und der Aerogele bestimmt. Es ist zu erkennen, das sowohl Pt/C als auch das Pt-Aerogel nach den 8000 Potentialzyklen die gleiche Aktivität aufweisen. Die Legierungsaerogele degradieren unter diesen Bedingungen nur unwesentlich bzw. verbessern sogar ihre Leistung.

Korrosionstest (bestimmt für die ausschliesslich Pt enthaltenden Katalysatoren): Hierbei werden die Elektroden mit den erfindungsgemässen Katalysatoren bei 1.5 V für 5 Stunden gehalten und die Sauerstoffreduktionsaktivität vor und nach der potentiostatischen Messung bestimmt. In Tabelle Beispiel 6/7 ist die Reduzierung der Aktivität nach dem Test in Prozent des Ausgangswertes gezeigt. Es ist zu erkennen, dass der Aerogel-Katalysator weniger Degradation zeigt als der kommerzielle geträgerte Pt/Vulcan XC72 Katalysator.

Die verwendeten Elektroden werden präpariert wie in Beispiel 5 beschrieben. Die erhaltenen Daten sind in der nachfolgenden Tabelle Beispiel 6/7 zu finden.

| Katalysator | Spezifische ORR-Aktivitat bei 0.9 V [mA/cm²_{meta 11}] | Massenspezifische ORR Aktivitat bei 0.9 V [mA/mgₘₑₜₐₗₗ] | Massenspezifische ORR Aktivitat bei 0.9 V [mA/mgₘₑₜₐₗₗ] nach Potential-Zyklus 1 | Reduktion der Massenspezifischen ORR Aktivitat bei 0.9 V nach Potential-Zyklus 1 [%] | Reduktion Massenspezifische ORR Aktivitat bei 0.9 V nach Korrosionstest in [%] |
|---|---|---|---|---|---|
| PtPd (1:1)-Aerogel | nicht zu bestimmen | 1000 | nicht bestimmt | -- | nicht bestimmt |
| PtPd (4:1)-Aerogel | nicht zu bestimmen | 1130 | 920 | -19 | nicht bestimmt |
| PtPd (1:4)-Aerogel | nicht zu bestimmen | 270 | nicht bestimmt | -- | nicht bestimmt |
| PtPd (3:2)-Aerogel | nicht zu bestimmen | 430 | 670 | +55 | nicht bestimmt |
| Pd-Aerogel | 0.10 | 66 | 25 | -62 | nicht bestimmt |
| Pt-Aerogel | 0.39 | 355 | 135 | -62 | -30 |
| 20% Pt/Vulcan | 0.43 | 225 | 131 | -42 | -75 |

## Patentansprüche

1. Hochoberflächiger trägerloser Katalysator aus mindestens einem Metall für elektrochemische Prozesse,
**dadurch gekennzeichnet, dass**
eine BET Oberfläche von mindestens 30 m²/g, vorzugsweise grösser 50 m²/g, vorgesehen ist, wobei diese BET-Oberfläche durch eine als Aerogel ausgeführte Anordnung des mindestens einen Metalls erzielt ist.

2. Katalysator nach Anspruch 1,
**dadurch gekennzeichnet, dass**
zwei oder mehr Metalle in legierter Form als Aerogel vorliegen.

3. Katalysator nach Anspruch 1 oder 2,
**dadurch gekennzeichnet, dass**
als Metall Pt, Pd, Au, Ir, Ru, Rh, Os, Cu, Ni, Co, Fe und/oder Mn verwendet sind, wobei vorzugsweise gewählte Metalle Pt, Pd, Au, Ir, Ru, Rh, Cu und/oder Ni sind; besonders bevorzugt hiervon wiederum Pt, Pd, Au, Ir, Ru, Ni, und/oder Cu.

4. Katalysator nach Anspruch 3,
**dadurch gekennzeichnet, dass**
das aktive Material eine Legierung der vorstehend genannten Metalle mit einem oder mehreren Metallen der Nebengruppen und Hauptgruppen ist.

5. Verfahren zur Herstellung eines Katalysators, insbesondere eines Katalysator nach einem der vorangegangenen Ansprüche, umfassend die folgenden Verfahrensschritte:
a) Bereitstellen einer wässrigen oder organischen Metallsalzlösung;
b) Hinzugabe einer wässrigen oder organischen Natriumborhydratlösung;
c) Ruhenlassen des wässrigen oder organischen Gemisches zur Bildung eines Metallhydrogels;
d) Waschen des Metallhydrogels mit Wasser und Zugabe von Aceton;
e) Abtrennen des Wassers zur Erlangung eines aceton-haltigen Metallhydrogels;
f) Einbringen des aceton-haltigen Metallhydrogels in einen Trockner und Austausch des Acetons mit flüssigem Kohlendioxid; und
g) Überführen des Kohlendioxids in die Gasphase durch Erhöhung der Temperatur des kohlendioxid-haltigen Metallhydrogels über den kritischen Punkt von Kohlendioxid und Entspannen und Ablassen des in die Gasphase übergetretenen Kohlendioxids.

6. Brennstoffzelle, Brennstoffzellenelektrode, Membran-Elektroden-Einheit und/oder Katalysatorschicht, die einen Katalysator gemäss einem der vorangehenden Ansprüche umfasst.

7. Elektrolyseur, dessen Elektrode, Membran-Elektroden-Einheit und/oder Katalysatorschicht einen Katalysator nach einem der vorangehenden Patentansprüche umfasst.

8. Metall-Luft-Batterie, insbesondere Metall-Sauerstoffbatterie, deren Elektrode, Separator-Elektroden-Einheit und/oder Katalysatorschicht einen Katalysator nach einem der vorangehenden Patentansprüche umfasst.
